# EUROPEAN PATENT SPECIFICATION

(11) **EP 4 113 066 B1**
(45) Date of publication and mention of the grant of the patent: **06.08.2025**
(21) Application number: 22180793.6
(22) Date of filing: 23.06.2022
(51) Int. Cl.: G01C 21/34, G01C 21/36, G08G 1/00, E01H 10/00, E01C 19/20, G06Q 10/047, G06Q 10/0631, G06Q 50/26, G08G 1/01, G08G 1/0967, G08G 1/0968, G06Q 50/40

(54) **METHOD AND SYSTEM FOR COMMUNICATING ROAD TREATMENT DATA**
VERFAHREN UND SYSTEM ZUR ÜBERTRAGUNG VON STRASSENBEHANDLUNGSDATEN
PROCÉDÉ ET SYSTÈME DE COMMUNICATION DE DONNÉES DE TRAITEMENT DE ROUTE

(30) Priority: 23.06.2021 GB 202108980
(43) Date of publication of application: 04.01.2023
(73) Proprietor: Illinois Tool Works, Inc., Glenview, Illinois 60025 (US)
(72) Inventor: WILCOX, Mark, Glenview, 60025 (US)
(74) Representative: HGF

(56) References cited:
- JP-A- 2012 103 985
- US-A1- 2009 198 421
- US-A1- 2011 298 638
- US-A1- 2014 067 265
- US-A1- 2019 293 442

## Description

### Field of the Invention

The present invention relates to a method for use in treating a road surface.

### Background

Roads are a common carriageway for many users to travel (e.g. in cars, buses or bicycles). An ability of a road user to travel on a given road is based, at least in part, on weather conditions. For example, during cold weather, roads may become covered in ice, which may result in dangerous driving conditions due to the user's vehicle not being able to effectively grip the road surface. Commonly, during weather where the road surface may be, or is, covered in ice, a road treatment material such as a solid material (e.g. rock salt) or a liquid such as a urea based treatment that prevents and reduces the build-up of ice may be applied to the road surface.

Generally, the process of road treatment is performed by a fleet of road treatment vehicles, each equipped with a supply of a road treatment material. Each vehicle is associated with a device for assisting the driver following a route around a portion of a road network to treat the roads along the route with the road treatment material. The device stores data indicative of the route to be followed by the vehicle. However, updating the route stored at the device, particularly for the plurality of devices of the fleet of vehicles, may be time consuming.

It is an object of embodiments of the invention to at least mitigate one or more of the problems of the prior art.

US 2019/293442 A1 relates to a system including a computer having a processor and a memory, the memory storing instructions executable by the processor to actuate a vehicle to follow a route, and actuate at least one of a snowplough and a material spreader on the vehicle.

US 2014/067265 A1 relates to systems and methods to discover and present road conditions to a user; a client can include sensors to measure local road conditions and local road conditions can be measured by a sensor and reported to a server.

US 2009/198421 A1 relates to a vehicle for spreading products on a road surface including distribution means, position means, and electronic control means cooperating with said distribution means and position means to adjust spreading parameters.

### Summary of the Invention

According to aspects of the invention, there is provided a method of communicating road treatment data to a plurality of control devices each associated with a road treatment vehicle, as defined by the appended claims. The method comprises: determining, at a first computer, road treatment data comprising route information indicative of a route around a road network to be followed by one of the road treatment vehicles, and treatment level data indicative of an amount of treatment material to be applied to one or more portions of the route by the road treatment vehicle and the map data indicating a road network in a geographical region corresponding to the route data and comprising at least one topographic identifier indicating a feature of the map data, wherein the control device is configured to automatically select the road treatment data;
communicating wirelessly the road treatment data to each of the plurality of control devices;
configuring the received road treatment data at each of the plurality of control devices for selection by a user;
receiving, at a control device amongst the plurality of control devices, a user input indicative of selected road treatment data, and outputting an indication of the route around the road network comprised within the selected road treatment data, through an interface unit of the control device,
receiving, by a control device amongst the plurality of control devices, a current location of a respective road treatment vehicle;
identifying, by the control device, at least one topographic identifier corresponding to the current location of the respective road treatment vehicle;
determining, by the control device, whether the at least one topographic identifier encountered by the respective road treatment vehicle, is comprised within the route data;
and, if a number of consecutively encountered topographic identifiers comprised within the route data is greater than a predetermined threshold, automatically selecting, by the control device, road treatment data to be followed by the respective road treatment vehicle, based on the at least one topographic identifiers.

### Brief Description of the Drawings

Embodiments of the invention will now be described by way of example only, with reference to the accompanying figures, in which:
Figure 1 shows an example of a system according to an embodiment of the present invention;
Figure 2 shows an example of a first computer according to an embodiment of the present invention;
Figure 3 shows an example of a control device according to an embodiment of the present invention;
Figure 4 shows an example of a road treatment vehicle according to an embodiment of the present invention;
Figure 5 show an example of a method according to an embodiment of the present invention;
Figures 6a-6c show an example of route information according to an embodiment of the present invention; and
Figures 7a-7b show an example of a spread pattern according to an embodiment of the present invention.

### Detailed Description of Embodiments of the Invention

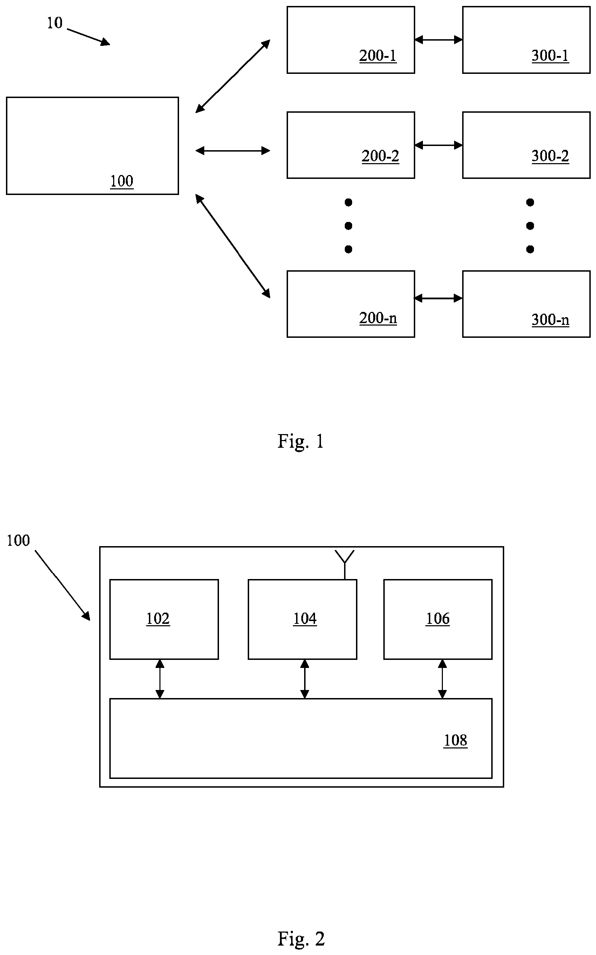

Figure 1 shows an example of a system 10 according to an embodiment of the present invention. The system 10 is a system 10 for communicating road treatment data as will be explained.

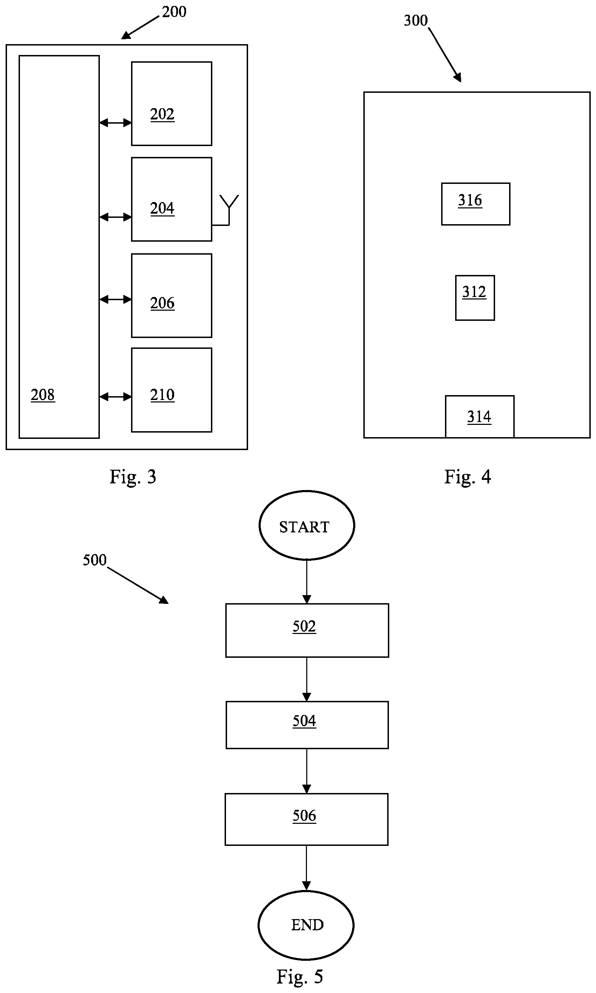

The system 10 comprises a first computer 100, a plurality of control devices 200-1, 200-2, ..., and 200-n. and a plurality of corresponding road treatment vehicles 300-1, 300-2, ..., and 300-n. In the system 10, each control device of the plurality of control devices 200-1, 200-2, ..., and 200-n is associated with a respective treatment vehicle of the plurality of road treatment vehicles 300-1, 300-2, ..., and 300-n. The first computer 100 will be discussed in more detail in relation to Figure 2. The plurality of control devices 200-1, 200-2, ..., and 200-n will be discussed in more detail in relation to Figure 3. The plurality of corresponding road treatment vehicles 300-1, 300-2, ..., and 300-n will be discussed in more detail in relation to Figure 4.

The first computer 100 is configured to be communicatively connected to the plurality of control devices 200-1, 200-2, ..., and 200-n. The plurality of control devices 200-1, 200-2, ..., and 200-n is configured to be communicatively connected to respective connection means (e.g. connection means 316, discussed below) of the plurality of corresponding road treatment vehicles 300-1, 300-2, ..., and 300-n. In some embodiments, auxiliary components, such as a server, may be comprised within the system 10 and may be communicatively connected to one or more of the first computer 100, the plurality of control devices 200-1, 200-2, ..., and 200-n, and the plurality of corresponding road treatment vehicles.

Figure 2 shows an example of a first computer 100. The first computer 100 may be, for example, a user computer, a server, a distributed computing system, or a cloud computing system i.e. formed by one or more remote server computers. The first computer 100 is configured to determine road treatment data comprising route information indicative of a route around a road network to be followed by a road treatment vehicle, and treatment level data indicative of an amount of treatment material to be applied to one or more portions of the route by the road treatment vehicle. The first computer 100 is configured to communicate wirelessly the road treatment data to each of the plurality of control devices 200-1, 200-2, ..., and 200-n, wherein each control device is associated with a respective road treatment vehicle 300-1, 300-2, ..., and 300-n. The first computer 100 may comprise one or more of an interface unit 102, a transceiver 104, a memory unit 106, and a processor 108.

The interface unit 102 may be configured to receive a user input; for example the interface unit 102 may comprise one or more of a keyboard, mouse, touchscreen and/or similar. In some examples the user interface unit 102 may be configured to include other features.

In some embodiments the transceiver 104 may be comprised of one or more individual transceivers 104. The transceiver 104 may be configured to transmit and receive information according to a communication protocol, which may be a wireless communication protocol. The wireless communication protocol may utilise radio communication, such as Bluetooth, Wi-Fi, over a wireless cellular network e.g. 4G, 5G etc, or similar. In some examples, the transceiver 104 may be configured to transmit and receive data using a combination of wired and wireless communication protocols.

The memory unit 106 may comprise one or more memory devices for storing data therein. The memory unit 106 may include a volatile memory and/or a non-volatile memory. The memory unit 106 may, for example, store an instruction or data associated with at least one other components of the first computer 100. In some examples, the memory unit 106 may store a software and/or a program.

The processor 108 may comprise any suitable electronic processor (e.g., a microprocessor, a microcontroller, an ASIC, etc.) that is configured to execute electronic instructions. In some embodiments, the processor 108 may access the memory unit 106 and execute and/or use that or those instructions and information to carry out or perform some or all of the functionality and methodology describe herein.

Figure 3 shows an example of a control device 200 from the plurality of control devices 200-1, 200-2, ..., 200-n. The control device 200 is configured to, after receiving the road treatment data from the first computer 100, configure the received road treatment data for selection by a user. In some embodiments, the control device 200 comprises one or more of an interface unit 202, a transceiver 204, a memory unit 206, a processor 208, and a location unit 210. In some embodiments the location unit 210 comprises means to determine the geographic location of the control device 200, such as a location determining means configured to use one or more of GLONASS, GPS, Galileo or similar.

In some embodiments, the control device 200 may be integrated with the road treatment vehicle 300. For example, the control device 200 may be a unit integrated in or mounted upon a control panel of the road treatment vehicle 300 (e.g. a dashboard console). In some embodiments, the control device 200 may be removeable from the road treatment vehicle 300. For example, the control device 200 may be a portable unit that may be communicatively connected to the road treatment vehicle 300, and may be removably connected/integrated into the road treatment vehicle 300, such as by using a docking station for the control device 200, for example.

Figure 4 schematically shows an example road treatment vehicle 300 from the plurality of road treatment vehicles 300-1, 300-2, ..., and 300-n. The road treatment vehicle 300 may comprise one or more of a sensor unit 312, road treatment material deployment means 314, and connection means 316. The sensor unit 312 may comprise at least one sensor device configured to acquire measurements of the environment of the sensor 312, such as external and/or internal to the road treatment vehicle 300. For example, the sensor unit 312 may be configured to measure an air temperature, a road surface temperature, an ice thickness, an air pressure, an altitude of the road, a gradient of the road, and/or a humidity of the environment proximal to the vehicle 300. In some embodiments, the sensor unit 312 may be connected to a treatment material reservoir (not illustrated) such as a hopper or liquid storage tank associated with the vehicle 300 to measure an amount of treatment material remaining in the treatment material reservoir.

The road treatment material deployment means 314 may be configured to control the treatment material deployment by the road treatment vehicle 300. The road treatment material deployment means 314 may comprise, in some embodiments, a deployment device for ejecting solid material e.g. road salt or similar, onto the road surface or one or more nozzles for spraying a liquid material onto the road surface. In some embodiments, the road treatment material deployment means 314 may be configured to deploy the treatment material based on at least one parameter indicating a respective characteristic of the treatment material (e.g. a treatment material spread pattern; an amount of treatment material to be applied, which may be defined in an amount e.g. weight or volume per unit area of the road surface; and a treatment composition, as discussed in more detail below). In some embodiments, the road treatment material deployment means 314 may be configured to be controlled automatically by the control device 200. The control device 200 may configure one or more parameters associated with the deployment means 314, such as the amount of treatment material to be applied. The control device 200 may receive data indicative of one or more measurements made by the sensor 312 of the road treatment vehicle 300, and/or the treatment level data comprised within the road treatment data.

The connection means 316 may comprise a means for commutatively connecting the road treatment vehicle 300 with the corresponding control device 200. For example, the connection means may be a transceiver, a docking station, or similar configured to communicate using e.g. Bluetooth or USB-c.

Figure 5 shows an example of a method 500 performed by system 10. The method 500 is of communicating road treatment data to a plurality of control devices 200-1, 200-2, ..., 200-n.

Step 502 comprises determining, at a first computer 100, road treatment data 600 comprising route information indicative of a route around a road network to be followed by a road treatment vehicle 300, and treatment level data indicative of an amount of treatment material to be applied to one or more portions of the route by the road treatment vehicle 300. In other words, the road treatment data 600 indicates a route to be followed by the vehicle 300 around a road network, and a configuration of the at least one parameter indicating one or more respective characteristics of the treatment material deployment around the route. The road treatment data 600 may be determined by one or more of the user of the first computer 100 selecting points on a displayed map to determine the route information, identifying road portions of the road network, and determining treatment level data for each road portion of the road network. In some examples, the road treatment data 600 may be determined based on data indicative of road conditions, data on historical route efficiency, service distance, and/or estimated salt and fuel usage, for example. The data indicative of road conditions may be understood to relate to one or more of an extent and/or severity of ice coverage and/or a road type (e.g. single lane, multiple lane or whether the road includes train/tram lines) to determine the treatment level data for the portions the route. In some examples, the data indicative of road conditions may be collected prior to treatment of a road network. For example, one or more road condition probe vehicles may travel on road portions included in the road network to collect the data indicative of road conditions, using one or more on-board sensors. In some examples, the one or more road condition probe vehicles may comprise one or more of a probe vehicle dedicated to retrieving the data indicative of road conditions (e.g. a "scouting" vehicle); a prior road treatment vehicle from the plurality of road treatment vehicles 300-1, 300-2, ..., and 300-n; or a utility vehicle (e.g. a logistics vehicle and/or a public transport vehicle (e.g. coach/bus) equipped with the one or more sensors that may cover large geographical areas during operation). Historical route efficiency may be understood to relate to how a road treatment vehicle 300 has travelled a route (e.g. time taken to travel the route, gritting results or similar) and/or how onboard quantities of the road treatment vehicle 300 are supplied and/or used before, during, and/or after the road treatment vehicle 300 has travelled the route (e.g. usage of treatment material, supply of treatment material, fuel usage or similar). Taking the supply of treatment material as an example, if a road treatment vehicle 300 is supplied with an amount of treatment material before travelling a route and the road treatment vehicle 300 finishes the route still with a large amount of the supplied treatment material remaining, the route efficiency may be considered low because the road treatment vehicle 300 may have been loaded initially with too much treatment material for the given route. As another example, the historical route efficiency may relate to a time taken for a road treatment vehicle 300 to travel the route. For example, it may be required that all portions of the route are travelled within a time period or limit. The period of time or time limit may start upon the treatment vehicle passing or leaving a predetermined location. For example, leaving a depot and finish upon completion of the last portion of the route by the road treatment vehicle 300. This may lead to, for example, only parts of the portions of the route being treated by the road treatment vehicle. In some examples, data relating to the historical route efficiency may be collected during an efficiency-targeting exercise and/or feedback from users of the plurality of road treatment vehicles 300-1, 300-2, ..., and 300-n.

Step 504 comprises communicating wirelessly the road treatment data to each of the plurality of control devices 200-1, 200-2, ..., and 200-n, wherein each control device 200 is associated with a respective road treatment vehicle 300. Advantageously, by communicating wirelessly the road treatment data to each of the plurality of control devices 200-1, 200-2, ..., and 200-n, each of the control devices 200-1, 200-2, ..., and 200-n of the respective plurality of road treatment vehicles 300-1, 300-2, ..., and 300-n are provided with the road treatment data 600. thereby removing the requirement for a system to individually communicate road treatment data 600 to each of the control devices 200. In this way, each vehicle 300 equipped with one of the control devices 200 stores data indicative of all of the routes communicated to any of the control devices 200-1, 200-2, ..., and 200-n, making each vehicle suitable to service any of the routes. In some embodiments of step 504, each control device 200-1, 200-2, ..., and 200-n is arranged to communicate to the first computer 100 an indication of the road treatment data being successfully received.

Step 506 comprises configuring the received road treatment data at each of the plurality of control devices 200-1, 200-2, ..., and 200-n for selection by a user. Configuring the received road treatment data at each of the plurality of control devices 200-1, 200-2, ..., and 200-n may comprise installing the road treatment data at each of the control devices 200. For example, installing the road treatment data at each of the control devices 200 may comprise copying or generating and storing the road treatment data in a road treatment data directory comprised within the memory of each of the control devices 200. Step 506 may comprise in some embodiments reporting, by each of the control devices 200-1, 200-2, ..., and 200-n to the first computer 100, an indication of the road treatment data being successfully installed at the respective control device. Advantageously, this may enable a status of each of the plurality of control devices 200-1, 200-2, ..., and 200-n to be determined at the first computer 100. In particular, the status is indicative of the road treatment data being installed, and therefore available for selection, at each of the plurality of control devices 200-1, 200-2, ..., and 200-n.

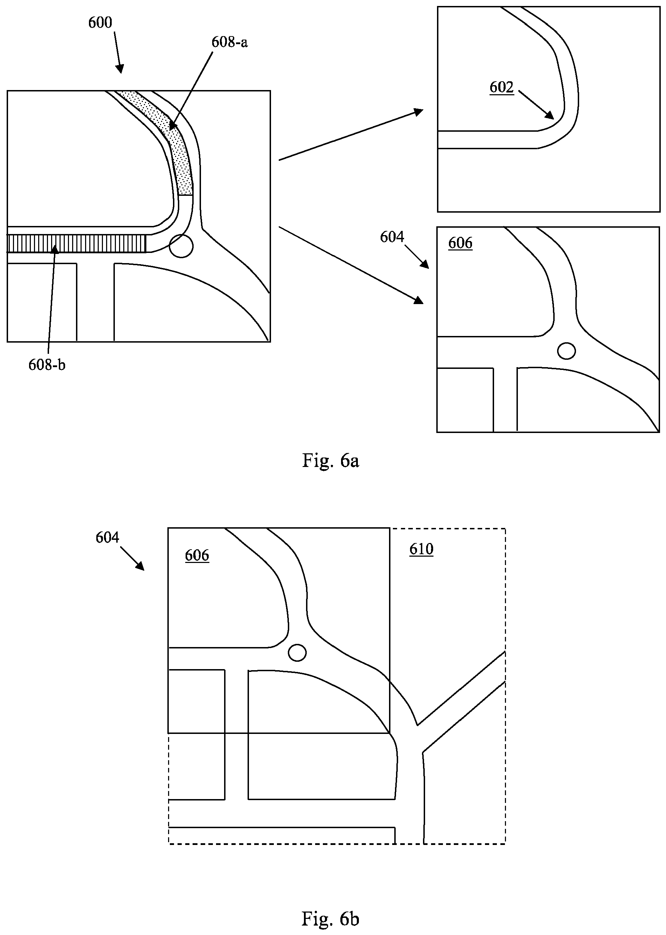

The method comprises receiving, at a control device amongst the plurality of control devices 200-1, 200-2, ..., and 200-n, a user input. The user input is indicative of selected road treatment data. The user input may be received through the interface unit 202 of the control device 200. For example, the user input may be received through a keyboard, mouse, touchscreen and/or similar of the interface unit 202. The method comprises outputting an indication of the route around the road network comprised within the selected road treatment data, through the interface unit 202 of the control device 200. For example, in response to receiving a user input, the control device 202 may output the indication of the route around the road network comprised within the selected road treatment data as is illustrated in Figures 6a ad 6c, as is discussed below. That is, a display of the interface unit 202 may output the route for a user to view. As such, the user may navigate a road treatment vehicle according to the outputted, selected road treatment data.

In some examples, in response to receiving, at the control device 200 amongst the plurality of control devices, the user input indicative of the selected road treatment data, the control device 200 may be configured to transmit an acceptance signal to the first computer 100. The acceptance signal may indicate the selected road treatment data. In response to receiving the acceptance signal, the first computer 100 may be configured to transmit to the remaining control devices amongst the plurality of control devices 200-1, 200-2, ..., and 200-n that the selected road treatment data has been selected by a different control device and is no longer available for selection. Advantageously, the scenario of multiple users selecting the same road treatment data is prevented. Alternatively, users of two or more control devices amongst the plurality of control devices 200-1, 200-2, ..., and 200-n may select the same road treatment data and the respective acceptance signals may indicate the selected road treatment data along with an indication of respective portions of the route that will be travelled by the respective road treatment vehicles associated with the control devices.

Figure 6a shows an example of road treatment data 600. The road treatment data 600 comprises route information and treatment level data 608-a, 608-b. The route information is indicative of a route around a road network to be followed by a road treatment vehicle 300 and the treatment level data 608-a, 608-b is indicative of an amount of treatment material to be applied to one or more portions of the route by the road treatment vehicle 300.

The route information comprises map data 604 and route data 602. The route data 602 indicates the route around the road network to be followed by the road treatment vehicle 300. For example, the "road network" may be a network of roads which the road treatment vehicle 300 is directed to travel along. The map data 604 indicates the road network in a geographical region 606 corresponding to the route data 602. The map data 604 may further indicate a road network corresponding to a geographical region 610 which extends beyond the road network indicated by the route data 602 (e.g. geographical region 610 extending beyond the portion of the road network included in the route data 602, illustrated in Figure 6b). That is, the map data 604 may indicate a portion of the road network not included in the route data 602 (e.g. a street neighbouring the road network). In some examples, the map data 604 may indicate the geographical region 610 beyond the road network up to a predetermined distance from the geographical region 606 corresponding to the route data 602. For example, the map data 604 may indicate the geographical region 610 beyond the road network up to, for example, 1 km (although other distances may be used) away from the geographical region 606 corresponding to the route data 602. The predetermined distance may be determined based on one or more of a user input, current road conditions, and the type of environment the road network is located in (e.g. rural or urban). Map data comprising the geographical region 610 may be indicated to the user of the road treatment vehicle 300 using interface means 202. Advantageously, the control device 200 of the road treatment vehicle 300 is provided with map data 604 in the vicinity of the route data 602 to enable navigation towards the route indicated by the route data 602, or a road treatment vehicle 300 that has deviated from the route indicated by the route data 602 is provided with map data 604 to enable navigation back towards the route indicated by the route data 602. In some examples, when a road treatment vehicle 300 has deviated from the road network indicated by the route data 602, the first computer 100 may transmit updated data to the control device 200 of the road treatment vehicle 300. For example, if the road treatment vehicle 300 deviates from the route data 602 by more than a predetermined distance, the first computer 100 may transmit, to the control device 200, updated map data 604 indicating the geographical region 610 beyond the route network indicated by the route data 602 so that the user of the road treatment vehicle 300 may navigate back to the road network to be treated. In some examples, if the road treatment vehicle 300 continues to deviate from the route data 602, the first computer 100 may transmit, to the control device 200, updated data indicating road treatment data for a different road network so that the user of the road treatment vehicle 300 may continue deviating from the route data 602 to treat a different road network. The control device 200 may configure the received updated data for selection by a user. The control device 200 may configure the received updated road treatment data in the same way as the control device 200 configures the road treatment data during step 506 of Figure 5.

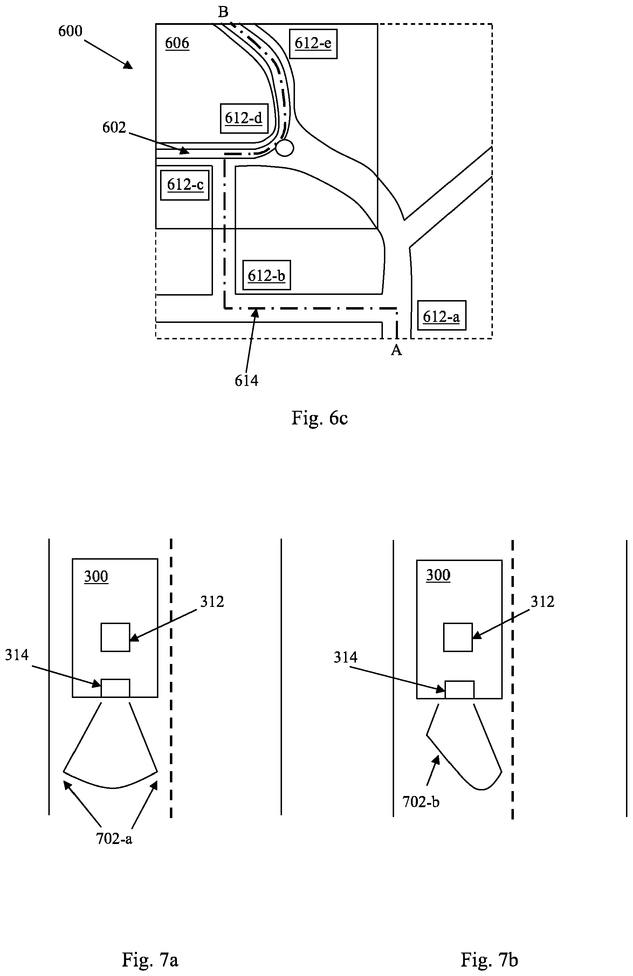

Figure 6c shows an example of route information. The map data 604 comprised within the route information comprises at least one topographical identifier, TOID, 612-a to 612-e. Each TOID may indicate a feature of the map data 604. For example, each TOID 612-a to 612-e may have a unique reference identifier used to identify a map feature (e.g. a building, a road, a field, a phone box, a pillar box, and/or a landmark). The route data is indicative of one or more TOIDs forming the route to be followed by the vehicle 300.

In use, a control device 200 may receive a current location of respective road treatment vehicle 300 using the location unit 210 comprised within the control device 200 to determine the current location (e.g. as latitude-longitude coordinates, and/or geocode or similar) of the respective road treatment vehicle, which may be transmitted to control device 200 via the connection means 316. The control device 200 may report the current location of the respective road treatment vehicle 300 to the first computer 100. The control device 200 may report its location periodically e.g. at predetermined time intervals such as 30 seconds, 1 minute or other period. Thus the first computer 100 is provided with the location generally continuously and in real-time. Advantageously, a user of the first computer 100 may be able to monitor the location of all road treatment vehicles 300, thereby providing assurance that the users of the plurality of road treatment vehicles 300-1, 300-2, ..., and 300-n are not experiencing issues. For example, the first computer 100 may alert a user of the first computer 100 if a road treatment vehicle 300 deviates from a route or stops for any length of time (e.g. if a road treatment vehicle 300 is involved in a road traffic accident).

The control device 200 may identify a TOID 612-a to 612-e corresponding to the current location of the respective road treatment vehicle 300. For example, the control device 200 may compare the geographic location of the respective road treatment vehicle 300 with the locations of TOIDs comprised within the route data 602.

The control device 200 determines whether a TOID 612-a to 612-e encountered by the respective treatment vehicle 300 is comprised within the route data 602. If the number of consecutively encountered TOIDs 612-a to 612-e comprised within the route data 602 is greater than a predetermined threshold, the control device 200 automatically selects the road treatment data 600 to be followed by the respective road treatment vehicle 300. In other words, the control device 200 automatically selects road treatment data 600 to follow by recognising a route a user is taking by matching encountered TOIDs (e.g. landmarks) to route data 602 comprising TOIDs (e.g. landmarks). Advantageously, this may enable the road treatment data 600 to be selected by the user of the road treatment vehicle 300 without the user having to provide any input to the control device 200 and without the user's attention being taken away from the road, thus improving user safety.

Referring to Figure 6c as an example, wherein road treatment data 600 comprises map data 604 (indicating a geographical region 606) and route date 602 (i.e. TOIDs 612-a to 612-b are not included in the route data 602 and TOIDs 612-c to 612-e are included in the route data 602), if the predetermined threshold is set to a value of two for example, the control device 200 automatically selects road treatment data 600 to be followed by the road treatment vehicle 300 upon the road treatment vehicle 300 encountering TOID 612-e, when travelling on journey 614 from point A to point B.

In an embodiment, the predetermined threshold may be determined by one or more of a user of a control device 200, a user of the first computer 100, a user of a road treatment vehicle 300, the control device 200, and the first computer 100. For example, one or more of the control device 200 and the first computer 100 may determine the predetermined threshold based on one or more of the route data 602 and the map data 604 (e.g. the number of TOIDs in a given area). Advantageously, the predetermined threshold may prevent the control device 200 erroneously automatically selecting the road treatment data 600 to be followed by the road treatment vehicle 300.

Referring back to Figure 6a, the road treatment data 600 comprises treatment level data 608-a, 608-b. The treatment level data 608-a, 608-b may be indicative of an amount of treatment material to be applied to one or more portions of the route by the road treatment vehicle 300. The treatment level data 608-a, 608-b may be indicative of an amount e.g. weight or volume of treatment material to be applied per unit area of road. The treatment level data 608-a, 608-b may be set at the first computer 100 when determining the road treatment data. Treatment level data 608-a, 608-b may be determined based on one or more of meteorological data (e.g. an air temperature and a weather forecast or similar), one or more sensor measurements of the sensor 312, and road usage data. Advantageously, the present invention may determine what type of treatment is most suitable, and to what extent it is most suitable, for different portions of the route, so that the treatment material may be deployed efficiently. For example, meteorological data may indicate a heightened risk of below-freezing temperatures and which roads are more likely to be affected. As another example, a sensor measurement for a road treatment vehicle 300 altitude may indicate the altitude from sea-level of the portion of the route. Therefore the altitude may be used to determine which portions of the route are more likely to be affected by icy road conditions. As another example, a sensor measurement for a road gradient data may indicate an incline and/or decline of portions of the route. Therefore the gradient may indicate how significant an effect of freezing is likely to be on a road portion (higher gradients mean icing is more dangerous) or how road treatment material is deployed (e.g. in a treatment material spread pattern, discussed below) by the road treatment material deployment means 314. As another example, the road usage data may indicate which roads are most frequently used and therefore are the highest priority to be treated.

The treatment level data 608-a, 608-b may determine how the road treatment material deployment means 314 deploys the treatment material. The treatment level data 608-a, 608-b may comprise at least one parameter indicating a respective characteristic of the treatment material for each of the one or more portions of the route by the road treatment vehicle 300. **In** an embodiment, the treatment level data 608-a, 608-b may be indicated to the user of the road treatment vehicle 300 by way of the interface unit 202 of the control device 200 in addition to the indication of the route around the road network.

The at least one parameter may comprise one or more of: a treatment material spread pattern; an amount of treatment material to be applied; and a treatment composition. Referring to Figure 6a, the treatment level data 608-a, 608-b respectively indicate portions of the route comprising different values for the at least one parameter (e.g. treatment level data 608-a may indicate an amount of treatment material of 15g/m² and treatment level data 608-b may indicate an amount of treatment material of 19 g/m²).

The amount of treatment material may be defined as a weight or volume of the treatment material per unit area of the road surface. The amount of treatment material may be a spread rate uplift indicating a change in the amount of treatment material relative to a previous amount of treatment material determined at the control device 200. For example, a previous amount of treatment material determined at the control device 200 may be 15 g/m² and a spread rate uplift may be 4 g/m², thereby indicating that the amount of treatment material determined at the control device 200 is to be increased by 4 g/m² relative to 15 g/m² (i.e. the previous amount of treatment material) to 19g/m². In some embodiments, the amount of treatment material may be indicative of an absolute amount of treatment material in some examples. For example, the amount of treatment material may be 19g/m², thereby indicating that the amount of treatment material determined at the control device 200 is to be altered to 19 g/m².

The previous amount of treatment material may indicate one or more of a previous spread rate uplift and a default amount of treatment material (i.e. a 'base' amount of treatment material). For example the default amount of treatment material may be understood as an amount of treatment material deployed by the road treatment material if the spread rate uplift is 0 g/m² (e.g. 15g/m² in the above example). The default amount of treatment material may be determined based on one or more of treatment level data 608-a, 608-b; an input from a user of the control device 200; and a sensor measurement of sensor 312 comprised within the road treatment vehicle 300.

The amount of treatment material may be determined based on one or more of an input from a user of the control device 200, the treatment level data 608-a, 608-b, and a sensor measurement of sensor 312 comprised within the road treatment vehicle 300. For example, a user of the road treatment vehicle 300 may notice that the driving condition of a portion of the route being travelled by the road treatment vehicle 300 is different than indicated by the treatment level data 608-a, 608-b (e.g. more ice coverage than expected). In this example, the user may input to one of the road treatment vehicle 300 and the control device 200 that the amount of treatment material (e.g. the default amount of treatment material) should be changed. As another example, the sensor 312 comprised within the road treatment vehicle 300 may measure that the road surface temperature is different than that indicated by the amount of treatment material determined at the control device 200 (e.g. road surface may be colder than expected) and the sensor 312 may report the measurement value of the road temperature to the control device 200, which in-turn may determine the spread rate uplift. As another example, once the control device 200 has received the input from the user of the road treatment vehicle 300 and/or the measurement value from the sensor 312 resulting in a change in the amount of treatment material (i.e. the treatment level data 608-a, 608b), the control device 200 may transmit the change in the amount of treatment material to the first computer 100. The first computer 100 may then use the user input and/or sensor measurement value as data of road conditions for determining road treatment data for any road treatment vehicle within the plurality of road treatment vehicles 300-1, 300-2, ..., and 300-n. Advantageously, the determined amount of road treatment material deployed is therefore most suitable for the actual conditions of the road surface, rather than what is most suitable for a forecasted condition of the road surface. While spread rate uplift is changed in the present example, other parameter(s) may be determined using one or more of the user of the road treatment vehicle 300 and the sensor 312 in other examples.

A treatment material spread pattern may indicate a deployment configuration of the treatment material with respect to the road treatment vehicle 300. For example, the treatment material spread pattern may indicate a direction in which the treatment material may be deployed. For example, the direction may be: directly behind the road treatment vehicle 300; towards the right of the road treatment material 300; or towards the left of the road treatment material 300, but may not be limited thereto. Advantageously, by directing the road treatment material, the road treatment vehicle 300 is able to provide a more targeted treatment material spread pattern. For example, the road treatment vehicle 300 may be controlled to deploy treatment material into a lane next to the road treatment vehicle 300. The treatment material spread pattern may be indicative of one or more of a treatment spread width 702-a and an asymmetry of the treatment material deployed treatment material 702-b. The treatment spread width 702-a may be understood to describe how wide the deployment of the treatment material is, once deployed. For example, the treatment spread width may be 0.5 m, 1 m, and 2 m, but is not limited thereto. Advantageously, adjusting the treatment spread width 702-a and/or asymmetry 702-b of the treatment material may allow a road treatment vehicle 300 to accurately deploy the treatment material on a number of different types of road portions and/or road gradients. For example, narrow lanes, dual carriageways, and residential streets may require different treatment spread widths 702-a and asymmetries 702-b in order to be sufficiently treated. Advantageously, by deploying road treatment material with an asymmetry, the road treatment material may prevent unnecessary deployment of treatment material to a specific area in the vicinity of the road treatment vehicle. For example, an asymmetric treatment material deployment configuration may prevent deployment of treatment material on to a side walk adjacent to the road that may be being used by pedestrians. Overall, an accurate spread pattern may reduce bounce when the salt hits the road surface, particularly at higher speeds.

The treatment composition may be indicative of a change in an amount of at least one constituent material used in the treatment material. The at least one constituent material used in the treatment material may be one or more of: a solid constituent and a liquid constituent, wherein a composition comprising at least one solid constituent and at least one liquid constituent may be known as a "pre-wet" composition. The solid constituent may comprise one or more of: a rock salt, a solid chloride salt (e.g. NaCl), and/or an acetate salt or similar. The liquid constituent may comprise one or more of: an aqueous chloride salt (e.g. brine), and/or an aqueous acetate salt or similar. In some examples, an aqueous acetate salt may be comprised within the treatment composition to reduce corrosion when using solid and/or aqueous chloride salt. A change in an amount of the at least one constituent material may comprise at least one of: introducing the at least one constituent material to the treatment material; removing the at least one constituent material from the treatment material; and changing the relative amounts of the at least one constituent material in the treatment material. For example, the change in the amount of at least one constituent material used in the treatment material may introduce a liquid constituent into the dry treatment material (i.e. treatment material consisting only solid constituents), forming a "pre-wet" composition. As another example, the change in the amount of at least one constituent material used in the treatment material may change a relative amount of at least one constituent so that the treatment material transitions from being composed of 70% solid constituent and 30% liquid constituent to being composed of 50% solid constituent and 50% liquid constituent. As yet another example, the change in the amount of at least one constituent material used in the treatment material may introduce further liquid constituents to a "pre-wet" composition (e.g. adding acetate to a "pre-wet" composition). Advantageously, by changing the amount of at least one constituent material used in the treatment material, the present invention may ensure the treatment material being deployed is configured for the respective road surface conditions.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

## Claims

1. A method of communicating road treatment data (600) to a plurality of control devices (200-1, 200-2, 200-n) each associated with a road treatment vehicle (300-1, 300-2, 300-n), comprising:
determining, at a first computer (100), road treatment data (600) comprising route information indicative of a route around a road network to be followed by one of the road treatment vehicles (300-1, 300-2, 300-n), and treatment level data (608-a, 608-b) indicative of an amount of treatment material to be applied to one or more portions of the route by the road treatment vehicle (300-1, 300-2, 300-n), wherein the route information comprises map data (604) and route data (602), the route data (602) indicating the route around the road network to be followed by the road treatment vehicle and the map data (604) indicating a road network in a geographical region (606) corresponding to the route data (602) and comprising at least one topographic identifier indicating a feature of the map data (604), wherein the control device (200) is configured to automatically select the road treatment data (600);
communicating wirelessly the road treatment data (600) to each of the plurality of control devices (200-1, 200-2, 200-n);
configuring the received road treatment data (600) at each of the plurality of control devices (200-1, 200-2, 200-n) for selection by a user;
receiving, at a control device (200) amongst the plurality of control devices (200-1, 200-2, 200-n), a user input indicative of selected road treatment data, and outputting an indication of the route around the road network comprised within the selected road treatment data, through an interface unit (202) of the control device (200),
receiving, by a control device (200) amongst the plurality of control devices (200-1, 200-2, 200-n), a current location of a respective road treatment vehicle (300);
identifying, by the control device (200), at least one topographic identifier corresponding to the current location of the respective road treatment vehicle (300);
determining, by the control device (200), whether the at least one topographic identifier encountered by the respective road treatment vehicle (300), is comprised within the route data (602); and,
if a number of consecutively encountered topographic identifiers comprised within the route data (602) is greater than a predetermined threshold, automatically selecting, by the control device (200), road treatment data (600) to be followed by the respective road treatment vehicle, based on the at least one topographic identifiers.

2. The method of claim 1,
wherein configuring the received road treatment data (600) at each of the plurality of control devices (200-1, 200-2, 200-n) comprises:
installing the road treatment data (600) at each of the control devices (200-1, 200-2, 200-n); and
reporting, by each of the control devices (200-1, 200-2, 200-n) to the first computer (100), an indication of the road treatment data (600) being successfully installed at the respective control device (200).

3. The method of claim 1, wherein the map data (604) is indicative of the road network corresponding to a geographical region (610) which extends beyond the road network indicated by the route data (602).

4. The method of any preceding claim, wherein the treatment level data (608-a, 608-b) comprises at least one parameter indicating a respective characteristic of the treatment material for each of the one or more portions of the route by the road treatment vehicle (300).

5. The method of claim 4, wherein the at least one parameter comprises one or more of a treatment material spread pattern, an amount of treatment material to be applied, and a treatment composition.

6. The method of claim 5, wherein the amount of treatment material to be applied is a spread rate uplift indicating a change in the amount of treatment material relative to a previous amount of treatment material determined at the control device (200).

7. The method of claim 5, wherein the amount of treatment material indicates an absolute amount of treatment material.

8. The method of claims 5-7, wherein the amount of treatment material is determined based on one or more of an input from a user of the control device (200), the treatment level data (608-a, 608-b), and a sensor measurement of a sensor comprised within the road treatment vehicle (300).

9. The method of claim 5 or 6, wherein the treatment composition indicates a change in an amount of at least one constituent material used in the treatment material.

10. The method of claim 5, wherein the treatment material spread pattern is indicative of a deployment configuration of the treatment material with respect to the road treatment vehicle (300).

11. The method of claim 10, wherein the treatment material spread pattern is indicative of one or more of a treatment spread width (702-a) and an asymmetry (702-b) of treatment material deployment.

12. The method of any preceding claim, wherein the first computer (100) is one of a user computer, a server, a distributed computing system, and a cloud computing system.

## Patentansprüche

1. Verfahren zum Übermitteln von Straßenbehandlungsdaten (600) an eine Vielzahl von Steuervorrichtungen (200-1, 200-2, 200-n), die jeweils einem Straßenbehandlungsfahrzeug (300-1, 300-2, 300-n) zugeordnet sind, das aufweist:
Bestimmen von Straßenbehandlungsdaten (600), die Routeninformationen aufweisen, die eine Route in einem Straßennetz angeben, die von einem der Straßenbehandlungsfahrzeuge (300-1, 300-2, 300-n) zu verfolgen ist, und Behandlungsebenendaten (608-a, 608-b), die eine Menge an Behandlungsmaterial angeben, das auf einen oder mehrere Abschnitte der Route durch das Straßenbehandlungsfahrzeug (300-1, 300-2, 300-n) aufzubringen ist, an einem ersten Computer (100), wobei die Routeninformationen Kartendaten (604) und Routendaten (602) aufweisen, wobei die Routendaten (602) die Route in dem Straßennetz angeben, die von dem Straßenbehandlungsfahrzeug zu verfolgen ist, und wobei die Kartendaten (604) ein Straßennetz in einer geographischen Region (606), die den Routendaten (602) entspricht, angeben und mindestens eine topographische Kennung aufweisen, die ein Merkmal der Kartendaten (604) angibt, wobei die Steuervorrichtung (200) konfiguriert ist, die Straßenbehandlungsdaten (600) automatisch auszuwählen;
drahtloses Übermitteln der Straßenbehandlungsdaten (600) an jede der Vielzahl von Steuervorrichtungen (200-1, 200-2, 200-n);
Konfigurieren der empfangenen Straßenbehandlungsdaten (600) an jeder der Vielzahl von Steuervorrichtungen (200-1, 200-2, 200-n) zur Auswahl durch einen Benutzer;
Empfangen einer Benutzereingabe, die ausgewählte Straßenbehandlungsdaten angibt, an einer Steuervorrichtung (200) unter der Vielzahl von Steuervorrichtungen (200-1, 200-2, 200-n), und Ausgeben einer Angabe der Route in dem Straßennetz, die innerhalb der ausgewählten Straßenbehandlungsdaten umfasst ist, über eine Schnittstelleneinheit (202) der Steuervorrichtung (200),
Empfangen eines aktuellen Standorts eines entsprechenden Straßenbehandlungsfahrzeugs (300) durch eine Steuervorrichtung (200) unter der Vielzahl von Steuervorrichtungen (200-1, 200-2, 200-n);
Identifizieren mindestens einer topografischen Kennung, die dem aktuellen Standort des jeweiligen Straßenbehandlungsfahrzeugs (300) entspricht, durch die Steuervorrichtung (200);
Bestimmen durch die Steuervorrichtung (200), ob die mindestens eine topografische Kennung, die von dem entsprechenden Straßenbehandlungsfahrzeug (300) angetroffen wird, in den Routendaten (602) umfasst ist; und
wenn eine Anzahl von aufeinanderfolgend angetroffenen topographischen Kennungen, die in den Routendaten (602) umfasst sind, größer als ein vorbestimmter Schwellenwert ist, automatisches Auswählen von Straßenbehandlungsdaten (600), denen das jeweilige Straßenbehandlungsfahrzeug folgen soll, durch die Steuervorrichtung (200) basierend auf den mindestens einen topographischen Kennungen.

2. Verfahren nach Anspruch 1,
wobei das Konfigurieren der empfangenen Straßenbehandlungsdaten (600) an jeder der Vielzahl von Steuervorrichtungen (200-1, 200-2, 200-n) aufweist:
Installieren der Straßenbehandlungsdaten (600) an jedem der Steuergeräte (200-1, 200-2, 200-n); und
Melden einer Angabe, dass die Straßenbehandlungsdaten (600) erfolgreich auf der jeweiligen Steuervorrichtung (200) installiert wurden, durch jede der Steuervorrichtungen (200-1, 200-2, 200-n) an den ersten Computer (100).

3. Verfahren nach Anspruch 1, wobei die Kartendaten (604) das Straßennetz angeben, das einer geographischen Region (610) entspricht, die sich über das Straßennetz hinaus erstreckt, das durch die Routendaten (602) angegeben wird.

4. Verfahren nach einem vorhergehenden Anspruch, wobei die Behandlungsebenendaten (608-a, 608-b) mindestens einen Parameter aufweisen, der eine jeweilige Eigenschaft des Behandlungsmaterials für jeden der einen oder mehreren Abschnitte der Route durch das Straßenbehandlungsfahrzeug (300) anzeigt.

5. Verfahren nach Anspruch 4, wobei der mindestens eine Parameter eines oder mehrere von einem Behandlungsmaterialausbreitungsmuster, einer Menge an aufzubringendem Behandlungsmaterial und einer Behandlungszusammensetzung aufweist.

6. Verfahren nach Anspruch 5, wobei die Menge an aufzubringendem Behandlungsmaterial eine Ausbreitungsgeschwindigkeitserhöhung ist, die eine Änderung der Menge an Behandlungsmaterial relativ zu einer vorhergehenden Menge an Behandlungsmaterial angibt, die an der Steuervorrichtung (200) bestimmt wird.

7. Verfahren nach Anspruch 5, wobei die Menge an Behandlungsmaterial eine absolute Menge an Behandlungsmaterial angibt.

8. Verfahren nach den Ansprüchen 5 bis 7, wobei die Menge an Behandlungsmaterial basierend auf einem oder mehreren einer Eingabe von einem Benutzer der Steuervorrichtung (200), der Behandlungsebenendaten (608-a, 608-b) und einer Sensormessung eines Sensors, der in dem Straßenbehandlungsfahrzeug (300) umfasst ist, bestimmt wird.

9. Verfahren nach Anspruch 5 oder 6, wobei die Behandlungszusammensetzung eine Änderung in einer Menge von mindestens einem in dem Behandlungsmaterial verwendeten Bestandsmaterial angibt.

10. Verfahren nach Anspruch 5, wobei das Behandlungsmaterialausbreitungsmuster eine Bereitstellungskonfiguration des Behandlungsmaterials in Bezug auf das Straßenbehandlungsfahrzeug (300) angibt.

11. Verfahren nach Anspruch 10, wobei das Behandlungsmaterialausbreitungsmuster eines oder mehrere von einer Behandlungsausbreitungsbreite (702-a) und einer Asymmetrie (702-b) der Behandlungsmaterialbereitstellung angibt.

12. Verfahren nach einem vorhergehenden Anspruch, wobei der erste Computer (100) eines von einem Benutzercomputer, einem Server, einem verteilten Rechensystem und einem Cloud-Rechensystem ist.

## Revendications

1. Procédé de communication de données de traitement de route (600) à une pluralité de dispositifs de commande (200-1, 200-2, 200-n) chacun associé à un véhicule de traitement de route (300-1, 300-2, 300-n), comprenant :
la détermination, au niveau d'un premier ordinateur (100), de données de traitement de route (600) comprenant des informations d'itinéraire indicatives d'un itinéraire autour d'un réseau routier à suivre par l'un des véhicules de traitement de route (300-1, 300-2, 300-n), et les données de niveau de traitement (608-a, 608-b) indicatives d'une quantité de matériau de traitement à appliquer sur une ou plusieurs portions de l'itinéraire par le véhicule de traitement de route (300-1, 300-2, 300-n), dans lequel les informations d'itinéraire comprennent des données cartographiques (604) et des données d'itinéraire (602), les données de route (602) indiquant l'itinéraire autour du réseau routier à suivre par le véhicule de traitement de route et les données cartographiques (604) indiquant un réseau routier dans une région géographique (606) correspondant aux données d'itinéraire (602) et comprenant l'au moins un identifiant topographique indiquant un attribut des données cartographiques (604), dans lequel le dispositif de commande (200) est configuré pour sélectionner automatiquement les données de traitement de route (600) ;
la communication non filaire des données de traitement de route (600) à chacun de la pluralité de dispositifs de commande (200-1, 200-2, 200-n) ;
la configuration des données de traitement de route (600) reçues au niveau de chacun de la pluralité de dispositifs de commande (200-1, 200-2, 200-n) pour une sélection par un utilisateur ;
la réception, au niveau d'un dispositif de commande (200) parmi la pluralité de dispositifs de commande (200-1, 200-2, 200-n), d'une entrée d'utilisateur indicative de données de traitement de route sélectionnées, et la fourniture en sortie d'une indication de l'itinéraire autour du réseau routier compris dans les données de traitement de route sélectionnées, par l'intermédiaire d'une unité d'interface (202) du dispositif de commande (200),
la réception, par un dispositif de commande (200) parmi la pluralité de dispositifs de commande (200-1, 200-2, 200-n), d'une position actuelle d'un véhicule de traitement de route (300) respectif ;
l'identification, par le dispositif de commande (200), de l'au moins un identifiant topographique correspondant à l'emplacement actuel du véhicule de traitement de route (300) respectif ;
le fait de déterminer, par le dispositif de commande (200), si l'au moins un identifiant topographique rencontré par le véhicule de traitement de route (300) respectif, est compris dans les données d'itinéraire (602) ; et,
si un nombre d'identifiants topographiques rencontrés consécutivement compris dans les données d'itinéraire (602) est supérieur à un seuil prédéterminé, la sélection automatique, par le dispositif de commande (200), des données de traitement de route (600) à suivre par le véhicule de traitement de route respectif, sur la base de l'au moins un identifiant topographique.

2. Procédé selon la revendication 1,
dans lequel la configuration des données de traitement de route (600) reçues au niveau de chacun de la pluralité de dispositifs de commande (200-1, 200-2, 200-n) comprend :
l'installation des données de traitement de route (600) au niveau de chacun des dispositifs de commande (200-1, 200-2, 200-n) ; et
le signalement, par chacun des dispositifs de commande (200-1, 200-2, 200-n) au premier ordinateur (100), d'une indication des données de traitement de route (600) qui a été installée avec succès au niveau du dispositif de commande (200) respectif.

3. Procédé selon la revendication 1, dans lequel les données cartographiques (604) sont indicatives du réseau routier correspondant à une région géographique (610) qui s'étend au-delà du réseau routier indiqué par les données d'itinéraire (602).

4. Procédé selon l'une quelconque des revendications précédentes, dans lequel les données de niveau de traitement (608-a, 608-b) comprennent l'au moins un paramètre indiquant une caractéristique respective du matériau de traitement pour chacune des une ou plusieurs portions de l'itinéraire par le véhicule de traitement de route (300).

5. Procédé selon la revendication 4, dans lequel l'au moins un paramètre comprend un ou plusieurs parmi un motif d'étalement de matériau de traitement, une quantité de matériau de traitement à appliquer et une composition de traitement.

6. Procédé selon la revendication 5, dans lequel la quantité de matériau de traitement à appliquer est un soulèvement de vitesse d'étalement indiquant un changement de la quantité de matériau de traitement par rapport à une quantité précédente de matériau de traitement déterminée au niveau du dispositif de commande (200).

7. Procédé selon la revendication 5, dans lequel la quantité de matériau de traitement indique une quantité absolue de matériau de traitement.

8. Procédé selon les revendications 5 à 7, dans lequel la quantité de matériau de traitement est déterminée sur la base d'une ou plusieurs parmi une entrée provenant d'un utilisateur du dispositif de commande (200), des données de niveau de traitement (608-a, 608-b) et une mesure de capteur d'un capteur compris au sein du véhicule de traitement de route (300).

9. Procédé selon la revendication 5 ou 6, dans lequel la composition de traitement indique un changement dans une quantité de l'au moins un matériau constituant utilisé dans le matériau de traitement.

10. Procédé selon la revendication 5, dans lequel le modèle d'étalement de matériau de traitement est indicatif d'une configuration de déploiement de matériau de traitement vis-à-vis du véhicule de traitement de route (300).

11. Procédé selon la revendication 10, dans lequel le modèle d'étalement de matériau de traitement est indicatif d'une ou plusieurs parmi une largeur d'étalement de traitement (702-a) et une asymétrie (702-b) de déploiement de matériau de traitement.

12. Procédé selon l'une quelconque des revendications précédentes, dans lequel le premier ordinateur (100) est l'un parmi un ordinateur d'utilisateur, un serveur, un système informatique distribué et un système informatique en nuage.
